# EUROPÄISCHE PATENTANMELDUNG

(11) **EP 1 785 219 A2**
(43) Veröffentlichungstag der Anmeldung: **16.05.2007**
(21) Anmeldenummer: 06022425.0
(22) Anmeldetag: 26.10.2006
(51) Int. Cl.: B23P 19/02, C10G 9/20, F28F 9/013, F28F 11/00

(54) **Vorrichtung zur Montage und Demontage von Rohrregistern in Prozessöfen**

(30) Priorität: 03.11.2005 DE 102005052524
(71) Anmelder: Selas-Linde GmbH, 82049 Höllriegelskreuth (DE)
(72) Erfinder: Gemmer, Franz, 83101 Rohrdorf (DE); Jacob, Gunter, 81477 München (DE); Wild, Stephan, 82418 Seehausen (DE)
(74) Vertreter: Kasseckert, Rainer

(57) **Zusammenfassung**

Die Erfindung betrifft eine Vorrichtung zur Montage und Demontage von Rohrregistem im Feuerraum eines Prozessofens in einer chemischen oder petrochemischen Industrieanlage, wobei jedes Rohrregister im wesentlichen aus vertikal angeordneten Rohren besteht und der Feuerraum, der von Stirnwänden, Seitenwänden, dem Feuerraumboden und der Feuerraumdecke umschlossen wird, in wenigstens einer der Stirnwände zumindest einen vertikalen Schlitz aufweist, der wenigstens so lange ist, wie die größte vertikale Erstreckung eines Rohrregister. Die Feuerraumdecke ist mit zumindest einem sich über die gesamte Feuerraumlänge erstreckenden horizontalen Schlitz versehen, der an einer der Stirnseiten des Feuerraums in einen vertikalen Schlitz übergeht. Mit einer Klemm- und Verfahreinrichtung werden Rohrregister über die beiden Schlitze aus dem Feuerraum hinaus bzw. in den Feuerraum hinein gefahren.

## Beschreibung

Die Erfindung betrifft eine Vorrichtung zur Montage und Demontage von Rohrregistem im Feuerraum eines Prozessofens in einer chemischen oder petrochemischen Industrieanlage, wobei jedes Rohrregister im wesentlichen aus vertikal angeordneten Rohren besteht und der Feuerraum, der von Stirnwänden, Seitenwänden, dem Feuerraumboden und der Feuerraumdecke umschlossen wird, in wenigstens einer der Stirnwände zumindest einen vertikalen Schlitz aufweist, der wenigstens so lange ist, wie die größte vertikale Erstreckung eines Rohrregister, sowie in der Feuerraumdecke einen horizontalen Schlitz aufweist, der sich über die gesamte Deckenlänge erstreckt.

Die Rohrregister in Prozessöfen in chemischen und petrochemischen Industrieanlagen sind auf Grund der hohen Feuerraumtemperaturen und der hohen Prozessdrücke starken thermischen und mechanischen Belastungen ausgesetzt. Trotz des hochwarmfesten Materials, aus dem die Registerrohre gefertigt sind, müssen daher beispielsweise die Rohrregister von Spaltöfen in Olefinanlagen etwa alle drei bis fünf Jahre ausgetauscht werden.

Das Auswechseln der verschlissenen Rohre bzw. Rohrregister ist nur bei kaltem, d. h. stillgelegtem Ofen möglich. Jede Stunde Ofenstillstand bedeutet Produktionsverlust und, in Anbetracht der hohen Produktionsmengen sowie der hohen Produktpreise, einen erheblichen finanziellen Verlust für den Anlagenbetreiber.

Gegenwärtig existieren mehrere Techniken, um verschlissene Rohrregister auszutauschen:

Eine der Techniken besteht darin, die Rohrregister im Feuerraum zu zerlegen und die Teilstücke über Einstiegstüren bzw. über demontierte Ofenwandpaneelen aus dem Feuerraum zu entfernen. Die neuen Rohre werden ebenfalls in Teilstücken über Einstiegstüren bzw. über demontierte Ofenwandpaneelen in den Feuerraum eingebracht und dort erst zusammengefügt. Diese Technik ist sehr zeitaufwendig und birgt wegen des notwendigen Ein- und Ausbaus von Hilfsgerüsten darüber hinaus die Gefahr, die teuere feuerfeste Ofenauskleidung zu beschädigen.

Bei einer zweiten Technik werden ganze Rohrregister nach oben aus dem Feuerraum heraus bzw. von oben in den Feuerraum hineingehoben. Hierzu ist es notwendig, neben wenigstens einem Teil der Feuerraumdecke auch Vorrichtungen, wie beispielsweise Spaltgaskühler, die oberhalb des Ofens montiert sind, mit großem Zeitaufwand zu demontieren und wieder zu montieren. Bei der Erstmontage eines solchen Ofen entsteht darüber hinaus ein erheblicher Zeitverlust, da die Vorrichtungen oberhalb der Feuerraumdecke erst dann angebaut werden können, wenn die Rohrregister bereits in den Feuerraum eingebaut sind.

Eine dritte Technik wird in der europäischen Patentschrift 1162251 beschrieben. Hier werden die Rohrregister, die oberhalb der Feuerraumdecke von den außerhalb des Ofens verlaufenden Verbindungsleitungen getrennt werden, mittels einer geeigneten Einrichtung durch eine vertikale Öffnung in einer Stirnwand des Prozessofens aus dem Feuerraum gefahren, nachdem sie vorher aus den Rohrdurchführungen in der Feuerraumdecke (Deckenhülsen) abgesenkt wurden. Diese Technik erlaubt zwar einen Austausch der Rohrregister mit einem im Vergleich zu den beiden oben beschriebenen Techniken erheblich reduzierten Zeitaufwand, jedoch ist sie mit einem größeren Bauaufwand verbunden, da die verfahrenstechnisch erforderliche Feuerraumhöhe wegen der notwendigen Absenkung der Rohrregister aus den Deckenhülsen vergrößert werden muss. Außerdem ist es bei dieser Technik erforderlich eine Einrichtung zum Verfahren der Rohrregister in den Feuerraum ein- und aus diesem wieder auszubauen, wodurch auch hier die Gefahr der Beschädigung der feuerfesten Ofenauskleidung besteht. Die technische Entwicklung geht dahin, beispielsweise die Rohrregister in Olefinspaltöfen mit immer kleineren Rohrdurchmessern und engeren Rohrabständen zu bauen. Dadurch wird es jedoch praktisch unmöglich, die in EP 1162251 beschrieben Technik anzuwenden, da die Durchführung der Rohrenden durch die Deckenhülsen bei der Montage eines Rohrregisters extrem schwierig ist.

Aufgabe der Erfindung ist es daher, eine Vorrichtung der eingangs genannten Art vorzuschlagen, mit der die Nachteile des Standes der Technik vermieden werden können und welche auch neuen technischen Gegebenheiten im Prozessofendesign (z. B. Spatrohrsysteme mit kleineren Rohrdurchmessern und engeren Rohrabständen) Rechnung trägt.

Diese Aufgabe wird erfindungsgemäß dadurch gelöst, dass
- die Feuerraumdecke mit zumindest einem sich über die gesamte Feuerraumlänge erstreckenden horizontalen Schlitz versehen ist, der an einer der Stirnseiten des Feuerraums in einen vertikalen Schlitz übergeht,
- oberhalb des horizontalen Schlitzes und parallel zu diesem eine Fahrbahn (Katzbahnträger bzw. Fahrbahnträger) für eine zum Transport der Rohrregister aus dem bzw. in den Feuerraum angeordnet ist, wobei die Fahrbahn sich über die gesamte Länge des horizontalen Schlitzes erstreckt und zumindest um eine Rohrregisterbreite über die vertikal geschlitzte Stirnwand des Feuerraumes hinausragt,
- die Vorrichtung eine Klemmeinrichtung aufweist, mit der die abgetrennten Rohre eines zu demontierenden bzw. zu montierenden Rohrregisters oberhalb der Feuerraumdecke zusammenhaltbar sind und welche mit geeigneten Einrichtungen, wie Hubzügen, Fahrwagen und Haspelfahrwerken, eine fahrbares Liftsystem bildet, welches sich auf der Fahrbahn abstützt und auf dieser in beide Richtungen und auf der gesamten Fahrbahnlänge verfahrbar ist.

Die horizontalen und vertikalen Schlitze in Decke und Stirnwand des Prozessofens verlaufen erfindungsgemäß während der Demontage und Montage der Rohre bzw. der Rohrregister über die gesamte Deckenlänge und von der Decke bis zum Boden des Feuerraumes. Um die sich daraus ergebenden statischen Probleme zu lösen und eine Instabilität des Ofens auszuschließen, sieht eine bevorzugte Ausgestaltung der Erfindung vor, dass über der Feuerraumdecke eine ausreichend stabile Stahlrahmenkonstruktion angebracht und mit dem Prozessofen fest verbunden ist, wobei die Stahlrahmenkonstruktion zumindest den horizontalen Schlitz überspannt. Während der Demontage und Montage der Rohre bzw. der Rohrregister übernimmt die Stahlrahmenkonstruktion zusätzlich auftretende Kräfte und verhindert so ein Instabilwerden der Prozessofenkonstruktion. Eine besonders bevorzugte Ausgestaltung der Erfindung sieht vor, dass die Stahlrahmenkonstruktion als Bühne zum Begehen der Feuerraumdecke ausgebildet ist.

Eine Variante der Erfindung sieht vor, dass die Fahrbahn als Katzbahnträger ausgebildet und an der Stahlrahmenkonstruktion oberhalb der Feuerraumdecke befestigt ist.

Eine andere Variante der Erfindung sieht vor, dass die Fahrbahn als Fahrbahnträger ausgebildet ist, der auf der Feuerraumdecke liegt und mit dieser fest verbunden ist.

Durch die erfindungsgemäße Vorrichtung ist es möglich, die Zeiten für einen Austausch der Rohre bzw. Rohrregister im Feuerraum von Prozessöfen der chemischen und petrochemischen Industrie im Vergleich zum Stand der Technik um ein bis zwei Drittel zu verkürzen und die Ofen- und Produktionsausfallzeiten entsprechen zu verringern.

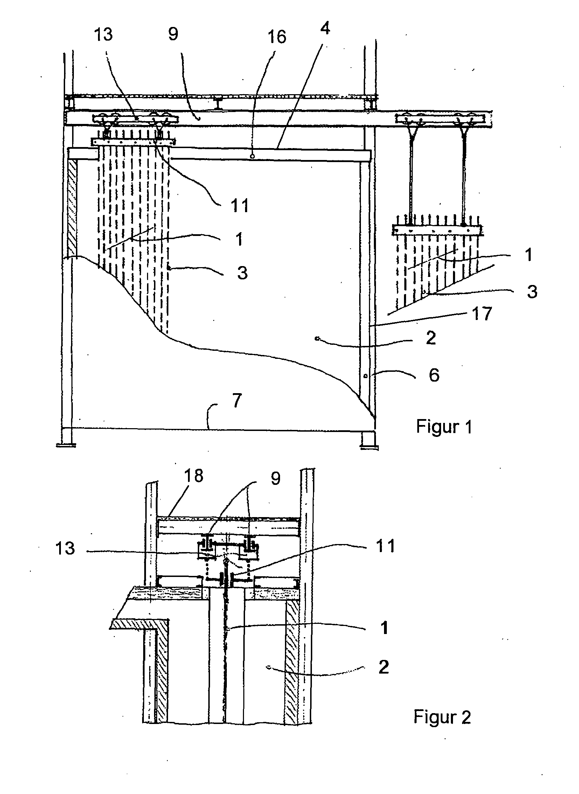

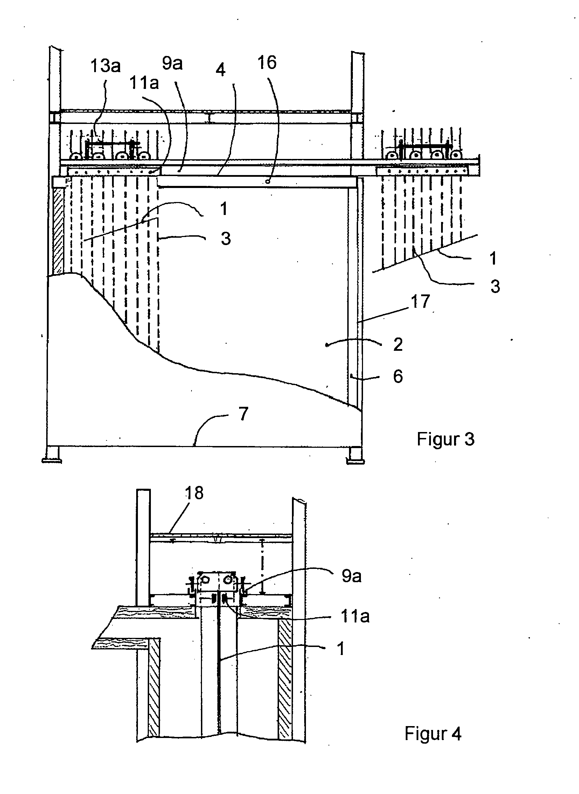

Anhand der in den folgenden Figuren schematisch dargestellten Ausführungsbeispiele soll die Erfindung näher erläutert werden. Die beiden Ausführungsbeispiele zeigen jeweils einen Spaltofen zur Erzeugung von Olefinen in einem Längs- (Figuren 1 und 3) und einem Querschnitt (Figuren 2 und 4). In den Figuren werden gleiche Anlagenteile durch gleiche Nummern gekennzeichnet.

Im Spaltofen sind mehrere Rohrregister 1, die im Wesentlichen aus vertikalen Rohren 3 aufgebaut sind, in einer Reihe nebeneinander eingebaut. Die Rohre, über welche die Prozessgase in die beheizte Zone ein- bzw. aus dieser austreten, durchdringen die Feuerraumdecke 4 im Bereich des horizontalen Schlitzes 16, der sich über die gesamte Länge der Feuerraumdecke 4 erstreckt. Ein weiterer, vertikaler Schlitz 6, in den der horizontale Schlitz 16 mündet, und der sich von der Feuerraumdecke 4 bis hinab zum Feuerraumboden 7 erstreckt, ist in der Stirnwand 17 des Feuerraums 2 angebracht. Beide Schlitze 16 und 6, die während des Betriebs des Spaltofens verschlossen und mit feuerfestem Material ausgefüllt sind, werden nur geöffnet, um die Rohrregister 1 zu demontieren und wieder zu montieren. Oberhalb der Feuerraumdecke 4 ist eine Stahlrahmenkonstruktion 18 angebracht, die den horizontalen Schlitz 16 überspannt und dem Spaltofen die notwendige Stabilität verleit, wenn die beiden Schlitze 16 und 6 gleichzeitig geöffnet sind.

Bei der Demontage werden die verschlissenen Rohre 3 eines Rohrregisters 1 mit der Klemmeinrichtung 11 bzw. 11 a außerhalb des Feuerraumes zueinander fixiert, bevor sie von den oberhalb des Feuerraumes verlaufenden Verbindungsrohren (nicht dargestellt) getrennt werden. Über die Klemmeinrichtung 11 bzw. 11a ist das Rohrregister 1 an das fahrbare Liftsystem 13 bzw. 13a fest angebunden und wird bei der Demontage aus dem Feuerraum herausgefahren und außerhalb des Spaltofens abgesenkt. Bei der Montage wird ein neues Rohrregister außerhalb des Spaltofens an das fahrbare Liftsystem 13 bzw. 13a mit Hilfe der Klemmvorrichtung 11 bzw. 11a angebunden und in Position gebracht. Die Aufhängung am fahrbaren Liftsystem 13 bzw. 13a erlaubt es, das Rohrregisters 1 exakt horizontal und vertikal zu positionieren, was insbesondere bei der Montage wichtig ist.

In den Figuren 1 und 2 ist ein Version der erfindungsgemäßen Vorrichtung dargestellt, bei der an der Unterseite der Stahlrahmenkonstruktion 18 ein Katzbahnträger 9 fest installiert ist, der oberhalb des horizontalen Schlitzes 16 horizontal verläuft und der etwas mehr als eine Rohrregisterbreite über die Stirnwand 17 des Feuerraumes 2 hinausragt. Das fahrbare Liftsystem 13 ist auf der ganzen Länge des Katzbahnträgers 9 horizontal in beide Richtungen beweglich.

In den Figuren 3 und 4 ist ein Version der erfindungsgemäßen Vorrichtung dargestellt, bei der auf der Ofenraumdecke 4 ein Fahrwerksträger 9a fest installiert ist, der links und rechts des horizontalen Schlitzes 16 verläuft und der etwas mehr als eine Rohrregisterbreite über die Stirnwand 17 des Feuerraumes 2 hinausragt. Das fahrbare Liftsystem 13a ist auf der ganzen Länge des Fahrbahnträgers 9a horizontal in beide Richtungen beweglich.

## Patentansprüche

1. Vorrichtung zur Montage und Demontage von Rohrregistern im Feuerraum eines Prozessofens in einer chemischen oder petrochemischen Industrieanlage, wobei jedes Rohrregister im wesentlichen aus vertikal angeordneten Rohren besteht und der Feuerraum, der von Stirnwänden, Seitenwänden, dem Feuerraumboden und der Feuerraumdecke umschlossen wird, in wenigstens einer der Stirnwände zumindest einen vertikalen Schlitz aufweist, der wenigstens so lange ist, wie die größte vertikale Erstreckung eines Rohrregister, **dadurch gekennzeichnet, dass**
- die Feuerraumdecke mit zumindest einem sich über die gesamte Feuerraumlänge erstreckenden horizontalen Schlitz versehen ist, der an einer der Stirnseiten des Feuerraums in einen vertikalen Schlitz übergeht,
- oberhalb des horizontalen Schlitzes und parallel zu diesem eine Fahrbahn (Katzbahnträger bzw. Fahrbahnträger) für eine zum Transport der Rohrregister aus dem bzw. in den Feuerraum angeordnet ist, wobei die Fahrbahn sich über die gesamte Länge des horizontalen Schlitzes erstreckt und zumindest um eine Rohrregisterbreite über die vertikal geschlitzte Stirnwand des Feuerraumes hinausragt,
- die Vorrichtung eine Klemmeinrichtung aufweist, mit der die abgetrennten Rohre eines zu demontierenden bzw. zu montierenden Rohrregisters oberhalb der Feuerraumdecke zusammenhaltbar sind und welche mit geeigneten Einrichtungen, wie Hubzügen, Fahrwagen und Haspelfahrwerken, eine fahrbares Liftsystem bildet, welches sich auf der Fahrbahn abstützt und auf dieser in beide Richtungen und auf der gesamten Fahrbahnlänge verfahrbar ist,

2. Vorrichtung nach Anspruch 1, **dadurch gekennzeichnet, dass** über der Feuerraumdecke eine ausreichend stabile Stahlrahmenkonstruktion angebracht und mit dem Prozessofen fest verbunden ist, wobei die Stahlrahmenkonstruktion zumindest den horizontalen Schlitz überspannt. Während der Demontage und Montage der Rohre bzw. der Rohrregister übernimmt die Stahlrahmenkonstruktion zusätzlich auftretende Kräfte und verhindert so ein Instabilwerden der Prozessofenkonstruktion.

3. Vorrichtung nach Anspruch 2, **dadurch gekennzeichnet, dass** die Stahlrahmenkonstruktion als Bühne zum Begehen der Feuerraumdecke ausgebildet ist bzw. werden kann.

4. Vorrichtung nach einem der Ansprüche 1 bis 3, **dadurch gekennzeichnet, dass** die Fahrbahn als Katzbahnträger ausgebildet und an der Stahlrahmenkonstruktion oberhalb der Feuerraumdecke befestigt ist.

5. Vorrichtung nach einem der Ansprüche 1 bis 3, **dadurch gekennzeichnet, dass** die Fahrbahn als Fahrbahnträger ausgebildet ist, der auf der Feuerraumdecke liegt und mit dieser fest verbunden ist.
